# EUROPEAN PATENT APPLICATION

(11) **EP 1 427 236 A1**
(43) Date of publication of application: **09.06.2004**
(21) Application number: 02360331.9
(22) Date of filing: 02.12.2002
(51) Int. Cl.: H04Q 7/38

(54) **A location map for selecting reception conditions for a mobile station depending on its present actual location**

(71) Applicant: ALCATEL, 75008 Paris (FR)
(72) Inventor: Fechter, Frank, 70825 Korntal (DE); Sigle, Rolf, 71384 Weinstadt (DE); Barth, Ulrich, 70825 Münchingen (DE); Hildebrand, Matthias, 34132 Kassel (DE); David, Klaus, 34314 Warburg (DE)
(74) Representative: Schäfer, Wolfgang, Dipl.-Ing.

(57) **Abstract**

A method of operating a radio access network (RAN) is described. The present actual location of a mobile station (MS) is determined. Reception conditions for the mobile station (MS) are selected from a location map depending on the present actual location of the mobile station (MS). These reception conditions may be used for a handover between cells of the radio access network (RAN).
In one embodiment the new reception conditions for the present actual location of the mobile station can be taken from the location map without performing measurement.
In another embodiment the new reception conditions are selected from a number of available reception conditions depending on quality values of the available reception conditions.

## Description

The invention relates to a method of operating a radio access network. As well, the invention relates to a radio access network and to a base station controller or a radio network controller of a radio access network.

In a cellular mobile system, e.g. in the so-called Global System for Mobile Communications (GSM), a base transceiver station provides an air interface to a mobile station. The base transceiver station is connected with a base station controller and both are part of a radio access network. The surface of a local region which is covered by the radio access network is partitioned into cells. Therefore, if the mobile station is moved e.g. by a user, a handover from the present cell to a new cell is necessary.

In principle, the mobile station measures the quality of the link to the present cell. If the quality drops below a given value, the mobile station informs the base station controller. Then, the mobile station measures the quality of the other cells which are available at the present actual location of the mobile station. From these available cells, the base station controller selects that one with the best quality. Then, the mobile station is instructed by the base station controller to switch to the selected new cell.

Apparently, the known procedure requires a number of steps. In particular, the air interface to the mobile station is used for the transmission of the measurement data to the base station controller and of the instructions back to the mobile station. As well, the known procedure requires some time so that the handover is always carried out after the optimal point in time.

It is an object of the invention to provide a method of operating a radio access network with an improved handover, in particular with less information to be transmitted over the air interface in connection with the handover.

This object is solved by a method according to claim 1. As well, the object is solved by a radio access network according to claim 7 and a base station controller or a radio network controller according to claim 12.

According to the invention, the present actual location of a mobile station is determined and reception conditions for the mobile station are selected from a location map depending on the present actual location of the mobile station.

As a result, it is only necessary to look up the location map if a handover is required. The new reception conditions which are listed in the location map for the present actual location of the mobile station only have to be taken from the location map. Then, the handover can be carried out immediately. No measurements or the like have to be performed prior to the handover.

The invention, therefore, enables a very fast procedure for a handover. Furthermore, this procedure does not require the transmission of measurement data from the mobile station to the base station controller. The air interface, therefore, is less used in connection with the handover.

In particular, the mobile station may be instructed by the base station controller at once if the quality decreases, wherein this instruction may comprise the new reception conditions, too. This offers the possibility to perform so-called emergency handovers with less risk that the connection is lost.

In an embodiment of the invention, the new reception conditions for the mobile station are selected from a number of available reception conditions depending on quality values of the available reception conditions. As a result, the handover is carried out to that cell which offers the best quality for the present actual location of the mobile station.

In another embodiment of the invention, the reception conditions for a specific location are measured, this information is inputted into the location map, and the afore-mentioned steps are repeated in order to fill up the location map with information for a greater number of specific locations.

This procedure realizes an automatic creation of the location map. Beginning from a starting point, the location map is filled with information which is derived from measurements of the mobile station. After some time, the location map is complete and no further measurements are necessary anymore.

This automatic creation of the location map offers the possibility of a so-called plug-and-play introduction of the location map into an existing radio access network.

Furthermore, the described procedure may be used for updating the location map so that changing reception conditions due to the weather or due to moving objects may be considered.

Further advantages and embodiments of the invention will be apparent from the following description and in view of the figures of the drawing.

Figure 1 shows an embodiment of a radio access network according to the invention, and

Figure 2 shows an embodiment of a location map according to the invention.

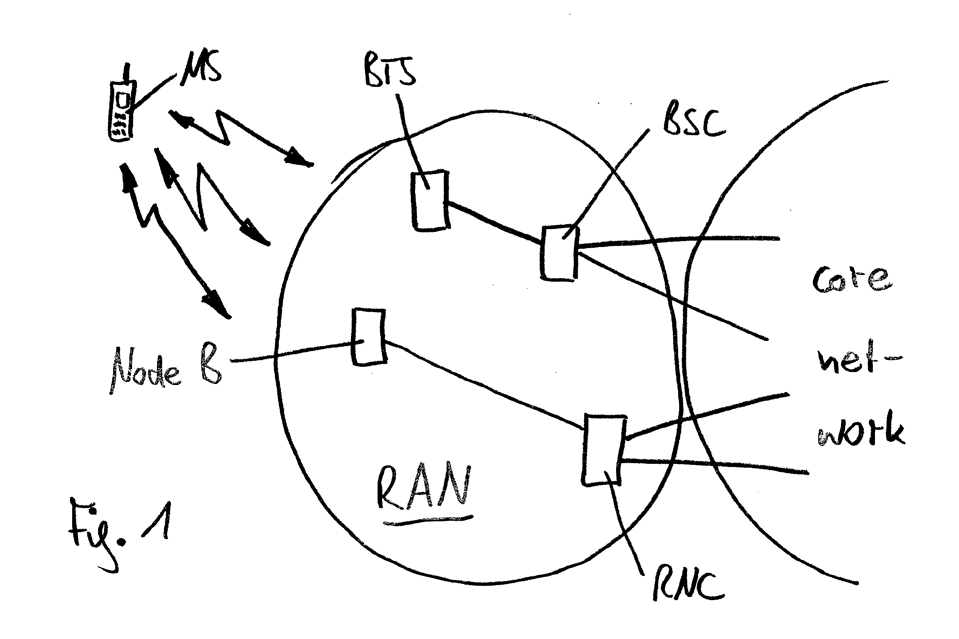

In figure 1, a multi-standard radio access network RAN is shown which is capable to provide services for the so-called Global System for Mobile Communications (GSM), the so-called Universal Mobile Telecommunications System (UMTS) and possibly other systems like so-called Wireless Local Area Networks (WLAN) (not shown). Furthermore, figure 1 shows a multi-mode mobile station MS which is capable to communicate with any one of the afore-mentioned communications systems. Of course, the invention as described below, may also be realized for only one of the afore-mentioned communications systems or in connection with other communications systems not mentioned above.

The RAN comprises a base transceiver station BTS for providing an air interface to the MS and for transmitting GSM traffic to and from the MS. The BTS is connected with a base station controller BSC which controls the BTS and the GSM traffic. The BSC is connected with a core network which may include known telecommunications networks for speech and data.

The RAN comprises a so-called Node B for providing an air interface and for transmitting UMTS traffic to and from the MS. The Node B is connected with a radio network controller RNC which controls the Node B and the UMTS traffic. The RNC is connected with the core network.

In connection with the afore-mentioned air interface, cells are defined covering the surface of a local region. As well, a hierarchical cell structure providing several cells e.g. for a specific part of the local region may be present. Such cells exist for GSM and for UMTS. In these cells, the reception conditions for the air interface are different, e.g. each cell has a specific operating frequency. Therefore, the MS has to know these reception conditions in order to be able to communicate with the BTS's or Node B's of the respective cell.

If a user moves within the local region, a cell handover has to be carried out between different cells of one and the same communications system, e.g. between GSM cells. As well, it may be necessary to carry out an inter-system handover between cells of different communications systems, e.g. from a GSM cell to an UMTS cell or vice versa. In both cases, the MS requires the reception conditions of the new cell so that it is able to switch the communication to the BTS's or Node B's of the new cell.

The described cells may partly or totally overlap each other. Therefore, at most specific locations to which the MS may be moved within the local region, the MS is capable to build up a link to more than one cell. However, e.g. due to different distances from a specific location of the MS to the BTS or Node B of different cells, the quality of the links from the MS to different cells varies at one and the same specific location.

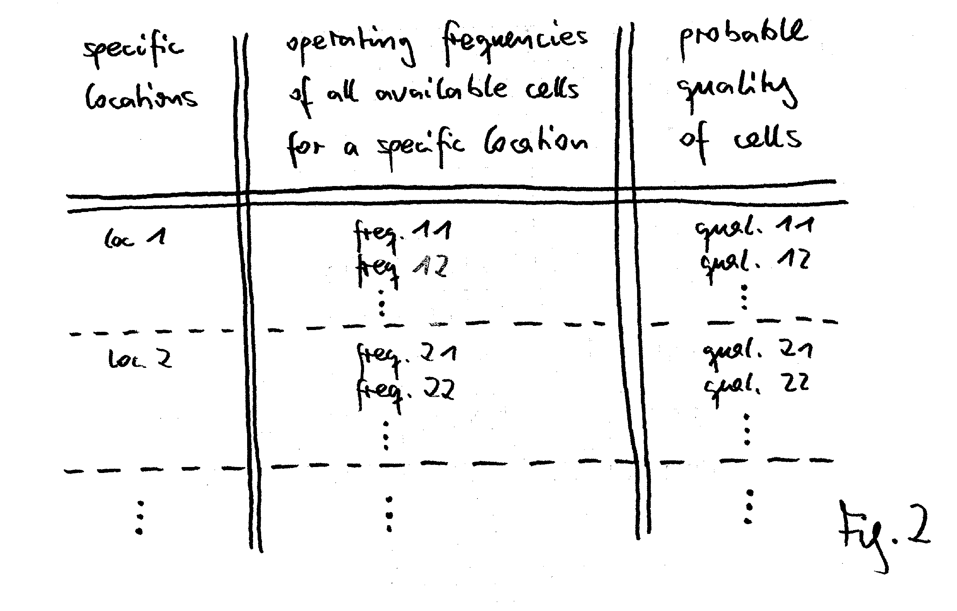

The RAN comprises a location map as shown in an exemplary embodiment in figure 2.

The location map of figure 2 provides a first column with a greater number of specific locations (loc.1; loc.2, etc.) of the local region. The specific locations are defined e.g. by geographical data and have a given resolution.

In a second column, the reception conditions of all available cells are provided for each specific location. As outlined, more than one cell may be reached from one and the same specific location so that the second column usually comprises a list of reception conditions for one specific location. In particular, the operating frequencies (freq.11, freq.12, ...; freq.21, freq.22,...; etc.) of all available cells are listed which may be reached by the MS from the respective specific location.

In a third column, a value is provided which describes the quality which a link to the different cells may probably have. This means in other words that the third column comprises a list for every specific location which is similar to the list of the second column and which indicates the probable communications quality (qual.11, qual.12, ...; qual.21, qual.22, ...; etc.) if the MS uses one of the available cells provided in the second column.

If a handover has to be carried out, the MS determines its present actual location. This determination may be carried out based on the communications system itself, e.g. with the help of the measurement of time differences between the receipt of specific signals from different BTS's or Node B's. As well, the present actual location of the MS may be given by a so-called Global Positioning System (GPS). The resolution of the determined present actual location is similar to the resolution of the specific locations comprised in the location map of figure 2.

Then, the location map of figure 2 is looked up, i.e. the present actual location of the MS is looked up in the location map. From the available operating frequencies provided for this specific location, that one with the probably best quality is selected. As already outlined, the operating frequencies correspond to cells so that the selection of the operating frequency with the probable best quality corresponds to the selection of the probably best cell for the present actual location of the MS.

Then, the handover to this selected new cell is carried out.

The described procedure for a handover, in particular the described selection of a new cell, is preferably performed by the BSC or the RNC. For that purpose, the location map is preferably present within the BSC and the RNC. However, it is also possible to store the location map and to control the procedure from the BTS and the Node B. As well, the location map may be stored within the MS so that the procedure may be carried out by the MS.

The location map of figure 2 may be configured prior to its installation and use within the RAN. For that purpose, the operating frequencies and their qualities have to be measured for all specific locations.

As well, it is possible to build up the location map of figure 2 automatically over the time.

For example, an empty map may be provided at a starting point. Then, if a handover is necessary, the MS measures which operating frequencies of available cells are present and which quality the respective links to the corresponding cells have. Then, this information is input into the location map for the specific location at which the MS presently is located. As already outlined, this actual location of the MS may be determined by the MS itself or with the help of other services. Finally, the measured frequencies and qualities are also used to select the new cell for the handover to be carried out.

If, at a later point in time, another handover is necessary, the location map is looked up as described above. If the location map comprises the relevant information, no measurements are carried out by the MS but the information stored in the location map is used. However, if the required information is not stored in the location map, further measurements are carried out by the MS as described above and further information is input into the location map.

By repeating the described procedure, the location map is filled up more and more. After some time, the location map is filled with all relevant information for the local region. Then, it is possible that, from time to time, further measurements are carried out by the MS e.g. in order to update or enlarge the location map. This ensures that changes e.g. of the quality of a specific cell are recognized and corrected in the location map.

## Claims

1. A method of operating a radio access network (RAN) and a mobile station (MS) comprising the steps of determining the present actual location of the mobile station (MS), looking up a location map, and selecting reception conditions for the mobile station (MS) from the location map depending on the present actual location of the mobile station (MS).

2. The method of claim 1 comprising the further step of selecting the new reception conditions for the mobile station (MS) from a number of available reception conditions depending on quality values of the available reception conditions.

3. The method of claim 1 comprising the further steps of measuring the reception conditions for a specific location, inputting this information into the location map, and repeating the afore-mentioned steps in order to fill up the location map with information for a greater number of specific locations.

4. The method of claim 1 wherein the selected reception conditions is the operating frequency which corresponds to a cell of the radio access network (RAN).

5. The method of claim 4 wherein the reception conditions are selected for the purpose of a handover to a new cell.

6. The method of claim 4 wherein the reception conditions depend on the used service e.g. the so-called Global System for Mobile Communications (GSM), the so-called Universal Mobile Telecommunications System (UMTS) and possibly other systems like so-called Wireless Local Area Networks (WLAN).

7. A radio access network (RAN) comprising a location map, wherein the present actual location of a mobile station (MS) may be determined and wherein the radio access network (RAN) is adapted to look up the location map and to select reception conditions for the mobile station (MS) from the location map depending on the present actual location of the mobile station (MS).

8. The radio access network (RAN) of claim 7 wherein the location map comprises at least one reception conditions for each one of a number of specific locations.

9. The radio access network (RAN) of claim 8 wherein the location map comprises a number of reception conditions and a number of corresponding quality values for each one of the number specific locations.

10. The radio access network (RAN) of claim 7 wherein the location map is comprised within a base station controller (BSC) and/or a radio network controller (RNC).

11. The radio access network (RAN) of claim 7 being adapted to perform multi-standard services e.g. for the so-called Global System for Mobile Communications (GSM), the so-called Universal Mobile Telecommunications System (UMTS) and possibly other systems like so-called Wireless Local Area Networks (WLAN).

12. A base station controller (BSC) or a radio network controller (RNC) of a radio access network (RAN) comprising a location map, wherein the present actual location of a mobile station (MS) may be determined and wherein the base station controller (BSC) or the radio network controller (RNC) is adapted to look up the location map and to select reception conditions for the mobile station (MS) from the location map depending on the present actual location of the mobile station (MS).
